(19) Europäisches Patentamt
European Patent Office
Office européen des brevets

(11) EP 2 965 147 B1

(12) EUROPÄISCHE PATENTSCHRIFT

(45) Veröffentlichungstag und Bekanntmachung des Hinweises auf die Patenterteilung:
**01.01.2020 Patentblatt 2020/01**

(21) Anmeldenummer: **14703541.4**

(22) Anmeldetag: **07.02.2014**

(51) Int Cl.:
***G02F 1/137*** *(2006.01)* ***C09K 19/60*** *(2006.01)*

(86) Internationale Anmeldenummer:
**PCT/EP2014/000341**

(87) Internationale Veröffentlichungsnummer:
**WO 2014/135240 (12.09.2014 Gazette 2014/37)**

(54) **FENSTER MIT VORRICHTUNG ZUR REGULIERUNG DES ENERGIE-DURCHTRITTS**

WINDOW COMPRISING DEVICE FOR REGULATING THE PASSAGE OF ENERGY

FENÊTRE COMPRENANT UN DISPOSITIF SERVANT À RÉGULER LE PASSAGE D’ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2013 EP 13001095**

(43) Veröffentlichungstag der Anmeldung:
**13.01.2016 Patentblatt 2016/02**

(73) Patentinhaber: **Merck Patent GmbH**
**64293 Darmstadt (DE)**

(72) Erfinder:
- **JUNGE, Michael**
**64319 Pfungstadt (DE)**
- **BEYER, Andreas**
**63452 Hanau (DE)**
- **PATWAL, Ursula**
**64354 Reinheim (DE)**

(56) Entgegenhaltungen:
**EP-A1- 0 056 492**
**WO-A1-2012/047843**
**WO-A1-2014/090373**
**JP-A- 2008 268 762**
**US-A1- 2009 098 314**

EP 2 965 147 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Fenster mit einer Vorrichtung zur Regulierung des Lichtdurchtritts durch eine lichtdurchlässige Fläche, welche eine Schaltschicht aufweist, die ein flüssigkristallines Medium enthaltend drei oder mehr unterschiedliche dichroitische Farbstoffe enthält. Die Vorrichtung wird erfindungsgemäß zur Regulierung des Lichtdurchtritts durch Fenster eingesetzt, um den Energieeintrag in ein Gebäude zu kontrollieren.

Unter dem Begriff Licht wird im Rahmen der vorliegenden Erfindung elektromagnetische Strahlung im UV-A-, VIS-, sowie NIR-Bereich verstanden. Insbesondere wird darunter Strahlung verstanden, welche von den üblicherweise in Fenstern verwendeten Materialien (z. B. Glas) nicht oder nur in einem vernachlässigbaren Umfang absorbiert wird. Gemäß den üblicherweise verwendeten Definitionen wird unter UV-A-Licht Strahlung einer Wellenlänge von 320 bis 380 nm verstanden, unter VIS-Licht Strahlung einer Wellenlänge von 380 nm bis 780 nm verstanden und unter NIR-Licht Strahlung einer Wellenlänge von 780 nm bis 2000 nm verstanden. Unter dem Begriff Licht wird im Rahmen der vorliegenden Erfindung daher Strahlung einer Wellenlänge von 320 bis 2000 nm verstanden.

Unter dem Begriff flüssigkristallines Medium wird im Rahmen der vorliegenden Erfindung ein Material verstanden, das unter bestimmten Bedingungen flüssigkristalline Eigenschaften aufweist. Bevorzugt hat das Material bei Raumtemperatur und in einer gewissen Temperaturspanne darüber und darunter flüssigkristalline Eigenschaften. Das flüssigkristalline Medium kann eine einzige Verbindung enthalten, oder es kann mehrere unterschiedliche Verbindungen enthalten.

Unter einem dichroitischen Farbstoff wird im Rahmen der vorliegenden Erfindung eine lichtabsorbierende Verbindung verstanden, bei der die Absorptionseigenschaften von der Ausrichtung der Moleküle zur Polarisationsrichtung des Lichts abhängig sind.

Die Energieeffizienz von Gebäuden gewinnt mit steigenden Energiekosten an Bedeutung. Fenster und Glasfassaden stellen diejenigen Gebäudeteile dar, durch die bei intensiver Sonneneinstrahlung der Großteil des Energie-Eintrags in das Gebäude stattfindet.

Es ist in der kalten Jahreszeit erwünscht, dass ein Maximum an Licht und damit transportierter Energie durch Glasflächen in ein Gebäude gelangt. Dadurch können Heiz- und Beleuchtungskosten eingespart werden.

Andererseits ist es in der warmen Jahreszeit erwünscht, dass ein möglichst geringer Energie-Eintrag durch Glasflächen in ein Gebäude erfolgt. Dadurch kann ein angenehmeres Raumklima erreicht werden, bzw. es können Kosten für die Klimatisierung eingespart werden. Weiterhin kann in diesen Fällen eine Herabsetzung der einfallenden Lichtintensität erwünscht sein, beispielsweise um Blendung durch direkte Sonneneinstrahlung zu verringern.

Es besteht daher Bedarf an Vorrichtungen, welche den Lichtdurchtritt und damit den Energiefluss durch Fenster bzw. Glasflächen kontrollieren. Insbesondere besteht Bedarf an Vorrichtungen, welche den Energiefluss durch Glasflächen an die zum jeweiligen Zeitpunkt vorherrschenden Bedingungen (Hitze, Kälte, hohe Sonneneinstrahlung, niedrige Sonneneinstrahlung) anpassen können.

Im Stand der Technik sind Vorrichtungen bekannt, welche prinzipiell zur Regulierung des Lichteintritts durch Fensterflächen o. ä. geeignet sind. Diese enthalten als Schaltschicht ein flüssigkristallines Medium enthaltend einen oder mehrere dichroitische Farbstoffe. Beispielsweise wird in der WO 2009/141295 eine Schaltvorrichtung offenbart, welche elektrisch gesteuert funktioniert, und eine Schaltschicht enthaltend ein flüssigkristallines Medium enthaltend einen oder mehrere dichroitische Farbstoffe aufweist. Die Schaltschicht stellt ein Guest-Host-System dar, welches zur Verwendung in Display-Vorrichtungen bekannt ist (vgl. B. Bahadur et al., Mol. Cryst. Liq. Cryst., 1991, 209, 39-61).

Auch die Vorrichtungen aus der WO 2010/118422, welche temperaturgesteuert schaltbar sind, weisen eine Schaltschicht auf, welche ein Guest-Host-System darstellt.

Die Offenlegungsschrift WO 2012/047843 offenbart eine Vorrichtung zur Regulierung des Lichtdurchtritts durch eine lichtdurchlässige Fläche, wobei die Vorrichtung mindestens eine Schaltschicht enthält, welche ein flüssigkristallines Medium enthaltend mindestens einen dichroitischen Farbstoff enthält, und wobei die Vorrichtung eine Transmission im Hellzustand von mindestens 30% hat, und wobei das flüssigkristalline Medium enthaltend den mindestens einen dichroitischen Farbstoff einen Ordnungsgrad von mindestens 0.78 hat.

Das Dokument JP 2008-268762 A beschreibt ein Beleuchtungsgerät und einen darin enthaltenen optischen Filter. WO 2014/090373 A1 bildet Stand der Technik gemäß Artikel 54(3) EPÜ und beschreibt flüssigkristalline Medien enthaltend mindestens einen Rylen-Farbstoff mit einem bestimmten langwelligen Absorptionsverhalten und deren Verwendung in schaltbaren Vorrichtungen und insbesondere Fenstern. US 2009/0098314 A1 beschreibt flüssigkristalline Zusammensetzungen, welche Anthrachinon-Farbstoffe mit bestimmten Substituenten enthalten und in Flüssigkristallvorrichtungen und insbesondere Anzeigevorrichtungen eingesetzt werden können.

Untersuchungen im Rahmen der vorliegenden Erfindung haben ergeben, dass die Erzielung eines möglichst großen Schalthubs, d.h. eines möglichst großen Unterschieds zwischen der Lichttransmission im Hellzustand und der Lichttransmission im Dunkelzustand der Vorrichtung, für Vorrichtungen zur Regulierung des Lichtdurchtritts sehr wünschenswert ist.

Diese technische Aufgabe hat im Zusammenhang mit Schaltvorrichtungen enthaltend ein flüssigkristallines

Medium enthaltend einen oder mehrere dichroitische Farbstoffe bis jetzt noch keine Beachtung gefunden. Stattdessen wurden solche Vorrichtungen zumeist auf ihren Kontrast hin optimiert, d.h. auf das Verhältnis von Lichttransmission im Hellzustand zu Lichttransmission im Dunkelzustand. Der Kontrast ist jedoch bei der Verwendung zur Regulierung des Lichtdurchtritts durch eine lichtdurchlässige Fläche von geringer Bedeutung, da es vorrangig auf eine hohe Lichtdurchlässigkeit im Hellzustand und weniger auf einen möglichst dunklen Dunkelzustand ankommt.

Im Rahmen von Untersuchungen an den oben genannten Vorrichtungen zur Regulierung des Lichtdurchtritts wurde nun gefunden, dass für bestimmte Kombinationen der Parameter der Schaltschicht Anisotropiegrad R und Lichttransmission im Hellzustand $\tau_{v\ hell}$ hervorragende Werte für den Hub der Lichttransmission der Vorrichtung erzielt werden können.

Der Anisotropiegrad R der Schaltschicht wird aus den gemessenen Werten für die Extinktion von parallel zur Orientierungsrichtung der ausgerichteten Moleküle des flüssigkristallinen Mediums polarisiertem Licht E(p) und den gemessenen Werten für die Extinktion von senkrecht zur Orientierungsrichtung der ausgerichteten Moleküle des flüssigkristallinen Mediums polarisiertem Licht E(s) nach der Formel R = [E(p)-E(s)] / [E(p) + 2*E(s)] berechnet. Es wird dabei Bezug genommen auf eine ansonsten identische Vorrichtung, welche keinen Farbstoff in der Schaltschicht enthält. Das exakte Verfahren ist in den Ausführungsbeispielen unter B) 1) angegeben.

Der Lichttransmissionsgrad des Hellzustands $\tau_{v\ hell}$ der Schaltschicht wird in Prozent angegeben. Er wird berechnet aus dem Verhältnis des Lichttransmissionsgrads der Schaltschicht im Hellzustand der Vorrichtung bezogen auf eine Vorrichtung mit Schaltschicht ohne Farbstoff als Referenz. Er wird im Rahmen der vorliegenden Erfindung nach der Europäischen Norm EN410, Gleichung (1) (Bestimmung der lichttechnischen und strahlungsphysikalischen Kenngrößen von Verglasungen) ermittelt aus den spektralen Transmissionsgraden unter Berücksichtigung der relativen spektralen Verteilung der Normlichtart und des spektralen Hellempfindlichkeitsgrads des Normalbeobachters.

Der Hub des Lichttransmissionsgrads der Schaltschicht wird in Prozent angegeben. Er stellt die Differenz zwischen dem Lichttransmissionsgrad im Hellzustand ($\tau_{v\ hell}$) und dem Lichttransmissionsgrad im Dunkelzustand ($\tau_{v\ dunkel}$) dar. Der Wert $\tau_{v\ dunkel}$ wird dabei entsprechend dem oben angegebenen Verfahren zur Messung von $\tau_{v\ hell}$ ermittelt, wobei die Vorrichtung dabei in den Dunkelzustand geschaltet ist.

Gegenstand der vorliegenden Erfindung ist somit ein Fenster gemäß Anspruch 1, umfassend eine Vorrichtung zur Regulierung des Lichtdurchtritts durch eine lichtdurchlässige Fläche, wobei die Vorrichtung mindestens eine Schaltschicht enthält, welche ein flüssigkristallines Medium enthaltend drei oder mehr unterschiedliche dichroitische Farbstoffe enthält, und wobei die Schaltschicht einen Anisotropiegrad R von mindestens 0,65 und einen Lichttransmissionsgrad des Hellzustands $\tau_{v\ hell}$ nach Norm EN410 von 40 % bis 90 % aufweist.

Eine solche Vorrichtung hat den Vorteil, dass sie einen hohen Hub der Lichttransmission aufweist. Dieser ist bevorzugt größer als 25 %, besonders bevorzugt größer als 28 %, ganz besonders bevorzugt größer als 30 %, und am stärksten bevorzugt größer als 35 % für eine Vorrichtung mit einer einzelnen Schaltschicht.

Bevorzugt ist die Vorrichtung dadurch gekennzeichnet, dass die Schaltschicht einen Anisotropiegrad R von 0.7 bis 0.9, bevorzugt von 0.7 bis 0.85, ganz besonders bevorzugt von 0.75 bis 0.8 aufweist.

Weiterhin bevorzugt ist die Vorrichtung dadurch gekennzeichnet, dass die Schaltschicht einen Lichttransmissionsgrad des Hellzustands $\tau_{v\ hell}$ von 60 % bis 85 %, bevorzugt von 70 % bis 80 % aufweist.

Bevorzugt ist die Vorrichtung dadurch gekennzeichnet, dass für den Parameter $\tau_{v\ hell}$ der Schaltschicht bei gegebenem Parameter R gilt:

$$\tau_{v\ hell\ min} < \tau_{v\ hell} < \tau_{v\ hell\ max}$$

und

$$\tau_{v\ hell\ min} = 0.8*(67*R + 30)$$

und

$$\tau_{v\ hell\ max} = 1.2*(67*R + 30).$$

Bevorzugt ist die Vorrichtung dadurch gekennzeichnet, dass für den Parameter R der Schaltschicht bei gegebenem Parameter $\tau_{v\ hell}$ gilt:

$$R_{min} < R < R_{max}$$

und

$$R_{min} = 0.8*(0.015* \tau_{v\ hell} - 0.45)$$

und

$$R_{max} = 1.2*(0.015* \tau_{v\ hell} - 0.45).$$

Die Vorrichtung des Fensters ist bevorzugt auf einer lichtdurchlässigen Fläche eines Gebäudes, eines Containers, eines Fahrzeugs oder eines sonstigen weitgehend geschlossenen Raums aufgebracht. Die Vorrichtung des Fensters kann jedoch für beliebige Innenräume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders relevant ist die Verwendung der Vorrichtung für Innenräume, welche starker Sonneneinstrahlung durch Fensterflächen ausgesetzt sind.

Im erfindungsgemäßen Fenster wird die Vorrichtung zur Regulierung des Lichtdurchtritts durch eine lichtdurchlässige Fläche in einen Innenraum verwendet.

Die im Fenster umfasste Vorrichtung kann auch zur ästhetischen Raumgestaltung eingesetzt werden, beispielsweise für Licht- und Farbeffekte. Auch kann ihr Signalwirkung zukommen. Beispielsweise können Tür- und Wandelemente enthaltend die Vorrichtung in grau oder in Farbe nach transparent geschaltet werden. Desweiteren kann die Vorrichtung auch eine weiße oder farbige flächige Hinterleuchtung, die in der Helligkeit moduliert wird, oder eine gelbe flächige Hinterleuchtung, die mit einer blauen Gast-Wirtsanzeige in ihrer Farbe moduliert wird, umfassen. Weitere ästhetische Effekte können auch mit Hilfe von seitlich einstrahlenden Lichtquellen wie weißen oder farbigen LEDs oder LED-Ketten in Kombination mit der Vorrichtung erzeugt werden. Hierbei können eine oder beide Glasseiten der erfindungsgemäßen Vorrichtung mit angerauhtem oder strukturiertem Glas versehen sein zur Lichtauskopplung und/oder zur Lichteffekterzeugung.

Erfindungsgemäß ist die Vorrichtung Bestandteil eines Fensters, besonders bevorzugt eines Fensters, welches Mehrscheiben-Isolierglas enthält.

Gemäß einer bevorzugten Ausführungsform ist die Vorrichtung direkt auf einer Glasfläche eines Fensters aufgebracht, besonders bevorzugt im Innenraum von Mehrscheiben-Isolierglas.

Erfindungsgemäß weist die Vorrichtung mindestens zwei Glasscheiben auf. Besonders bevorzugt weist das Fenster enthaltend die Vorrichtung insgesamt mindestens drei Glasscheiben auf. Dabei ist es bevorzugt, dass die Vorrichtung zwischen zwei Glasscheiben des Fensters angeordnet ist.

Gemäß einer bevorzugten Ausführungsform ist die Vorrichtung im Inneren von Mehrscheiben- Isolierglas angebracht oder außen an einem solchen Glas angebracht. Allgemein bevorzugt ist die Verwendung auf einer zum Innenraum hin gerichteten Seite einer Scheibe oder im Zwischenraum zwischen zwei Glasscheiben bei Mehrscheiben- Isolierglas. Es sind jedoch auch andere Anordnungen denkbar und in bestimmten Fällen vorzuziehen. Der Fachmann kann dabei Vor- und Nachteile bestimmter Anordnungen bezüglich der Haltbarkeit der Vorrichtung, optischen und ästhetischen Gesichtspunkten, praktischen Gesichtspunkten bezüglich der Reinigung der Scheiben sowie bezüglich der Reaktivität der Vorrichtung gegenüber Temperaturänderungen gegeneinander abwägen.

Besonders bevorzugt ist eine Anordnung, bei der eine erste Glasscheibe des Fensters durch eine Glasscheibe der Vorrichtung gebildet ist, so dass die Schichtenabfolge des Fensters enthaltend die Vorrichtung wie folgt ist:

1) Glasschicht
2) elektrisch leitende Schicht, bevorzugt ITO-Schicht
3) Orientierungsschicht
4) Schaltschicht
5) Orientierungsschicht
6) elektrisch leitende Schicht, bevorzugt ITO-Schicht
7) Glasschicht
8) Glasschicht,

wobei zwischen der Glasschicht 7) und 8) ein Freiraum vorliegt, welcher beispielsweise mit einem isolierenden Gas,

wie einem Edelgas, gefüllt sein kann.

Bevorzugt ist das Fenster derart angeordnet, dass die Schicht 1) an den Außenraum und die Schicht 8) an den Innenraum angrenzt. Eine umgekehrte Anordnung ist jedoch auch möglich und unter bestimmten Bedingungen bevorzugt.

Die oben angegebene Schichtenfolge kann durch weitere Schichten, wie beispielsweise zusätzliche Glasschichten oder Schutzschichten, beispielsweise gegen UV-Strahlung, gegen NIR-Strahlung, gegen VIS-Strahlung und/oder gegen physische Beschädigung, ergänzt sein.

Eine solche Aufbringung kann durch Nachrüsten eines bereits bestehenden Fensters oder durch kompletten Neueinbau erfolgen.

Erfindungsgemäß weist die Vorrichtung eine Flächenausdehnung von mindestens 0,05 $m^2$ auf, bevorzugt mindestens 0,1 $m^2$, besonders bevorzugt mindestens 0,5 $m^2$ und ganz besonders bevorzugt mindestens 0,8 $m^2$.

Die Vorrichtung stellt eine schaltbare Vorrichtung dar. Unter Schaltung der Vorrichtung wird dabei eine Änderung der Lichtdurchlässigkeit der Vorrichtung verstanden. Diese kann erfindungsgemäß zur Regulierung des Licht-Durchtritts durch die Vorrichtung und damit des Lichteintritts in einen Raum hinein genutzt werden.

Die Vorrichtung ist bevorzugt elektrisch schaltbar. Sie kann aber auch rein thermisch schaltbar sein, wie es beispielsweise in WO 2010/118422 für Vorrichtungen zur Regulierung des Lichtdurchtritts beschrieben wird.

In letzterem Fall erfolgt das Schalten bevorzugt durch einen Übergang von einem nematischen zu einem isotropen Zustand durch Änderung der Temperatur der Schaltschicht enthaltend das erfindungsgemäße flüssigkristalline Medium.

Im nematischen Zustand liegen die Moleküle des flüssigkristallinen Mediums geordnet vor und damit auch die dichroitischen Verbindungen, beispielsweise parallel ausgerichtet zur Oberfläche der Vorrichtung durch die Wirkung einer Orientierungsschicht. Im isotropen Zustand liegen die Moleküle ungeordnet vor. Die Ordnung der Moleküle des flüssigkristallinen Mediums bewirkt eine Ordnung der dichroitischen Farbstoffe. Der Unterschied zwischen geordnetem und ungeordnetem Vorliegen der dichroitischen Farbstoffe bewirkt seinerseits einen Unterschied in der Lichtdurchlässigkeit der erfindungsgemäßen Vorrichtung, gemäß dem Prinzip, dass dichroitische Farbstoff-Moleküle je nach Orientierung in Bezug auf die Schwingungsebene des Lichts einen höheren oder einen niedrigeren Absorptionskoeffizienten aufweisen.

Ist die Vorrichtung elektrisch schaltbar, weist sie Mittel zur Ausrichtung der Moleküle des flüssigkristallinen Mediums der Schaltschicht durch elektrische Spannung auf. Bevorzugt weist sie in diesem Fall zwei oder mehr Elektroden auf, die zu beiden Seiten der Schaltschicht enthaltend das flüssigkristalline Medium angebracht sind. Die Elektroden bestehen bevorzugt aus ITO oder aus einer dünnen, bevorzugt transparenten Metall- und/oder Metalloxidschicht, beispielsweise aus Silber oder einem alternativen, dem Fachmann für diese Verwendung bekannten Material. Die Elektroden sind bevorzugt mit elektrischen Anschlüssen versehen. Die Stromversorgung wird bevorzugt durch eine Batterie, einen Akkumulator, eine Superkapazität oder durch externe Stromversorgung bereitgestellt.

Der Schaltvorgang erfolgt im Fall von elektrischer Schaltung durch eine Ausrichtung der Moleküle des flüssigkristallinen Mediums durch das Anlegen von Spannung. Die drei oder mehr unterschiedlichen dichroitischen Farbstoffe werden dadurch, wie oben erläutert, ebenfalls ausgerichtet, so dass ein Unterschied in der Lichtdurchlässigkeit der Vorrichtung bewirkt wird.

In einer bevorzugten Ausführungsform wird dabei die Vorrichtung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist das flüssigkristalline Medium in beiden Zuständen nematisch. Der spannungslose Zustand ist bevorzugt dadurch gekennzeichnet, dass die Moleküle des flüssigkristallinen Mediums, und damit die dichroitischen Farbstoffe, parallel zur Oberfläche der Vorrichtung ausgerichtet vorliegen (homogene Orientierung). Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Mediums, und damit die dichroitischen Farbstoffe, senkrecht zur Oberfläche der Vorrichtung vorliegen.

In einer zur oben genannten Ausführungsform alternativen Ausführungsform wird die Vorrichtung von einem Zustand mit geringer Absorption, d. h. hoher Lichtdurchlässigkeit, der ohne Spannung vorliegt, in einen Zustand mit höherer Absorption, d. h. geringerer Lichtdurchlässigkeit, überführt. Bevorzugt ist das flüssigkristalline Medium in beiden Zuständen nematisch. Der spannungslose Zustand ist bevorzugt dadurch gekennzeichnet, dass die Moleküle des flüssigkristallinen Mediums, und damit die dichroitischen Farbstoffe, senkrecht zur Oberfläche der Vorrichtung ausgerichtet vorliegen (homöotrope Ausrichtung). Dies wird bevorzugt durch eine entsprechend gewählte Orientierungsschicht erreicht. Der Zustand unter Spannung ist dann bevorzugt dadurch gekennzeichnet, dass die Moleküle des flüssigkristallinen Mediums, und damit die dichroitischen Farbstoffe, parallel zur Oberfläche der Vorrichtung vorliegen.

Gemäß einer bevorzugten Ausführungsform ist die Vorrichtung dadurch gekennzeichnet, dass sie sämtliche Energie, die sie zur Schaltung der Schaltschicht benötigt, selbst erzeugt. Die Vorrichtung ist also bevorzugt autonom und benötigt keine von außen zugeführte Energie. Dazu umfasst sie bevorzugt eine Vorrichtung zur Umwandlung von Lichtenergie in elektrische Energie, besonders bevorzugt eine Solarzelle.

In einer bevorzugten Ausführungsform der Erfindung ist die Vorrichtung zur Umwandlung von Lichtenergie in elektrische Energie elektrisch mit den Mitteln zur elektrischen Schaltung der erfindungsgemäßen Vorrichtung verbunden. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innen in der Vorrichtung angebracht, wie beispielsweise in WO 2009/141295 offenbart. Bevorzugt eingesetzt werden Solarzellen, welche bei diffusem Licht besonders effizient sind, sowie transparente Solarzellen. Es können beispielsweise Silicium-Solarzellen oder organische Solarzellen in den Vorrichtungen verwendet werden.

Die Vorrichtung weist bevorzugt den folgenden Schichtaufbau auf, wobei die Schichten bevorzugt unmittelbar aneinander angrenzen:

1) Glasschicht
2) elektrisch leitende Schicht, bevorzugt ITO-Schicht
3) Orientierungsschicht
4) Schaltschicht
5) Orientierungsschicht
6) elektrisch leitende Schicht, bevorzugt ITO-Schicht
7) Glasschicht.

Bevorzugt umfasst die Vorrichtung eine oder mehrere, besonders bevorzugt zwei Orientierungsschichten, welche direkt angrenzend an die Schaltschicht angeordnet sind. Die Orientierungsschicht und die Elektrode können in einer Doppelschicht vorliegen, beispielsweise in einer mit Polyimid beschichteten ITO-Schicht. Bevorzugt sind die Orientierungsschichten Polyimid-Schichten, besonders bevorzugt Schichten aus geriebenem Polyimid. Auf bestimmte, dem Fachmann bekannte Art geriebenes Polyimid führt zu einer Vorzugsausrichtung der Moleküle des flüssigkristallinen Mediums in Reiberichtung, wenn die Moleküle planar zur Orientierungsschicht vorliegen (homogene Ausrichtung). Zum Erreichen von vertikaler Ausrichtung der Moleküle des flüssigkristallinen Mediums zur Oberfläche der Orientierungsschicht (homöotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Vorzugsrichtung der Moleküle des flüssigkristallinen Mediums verwendet werden (photoalignment).

Weiterhin ist es bevorzugt, dass die Moleküle des flüssigkristallinen Mediums bei der homogenen Ausrichtung nicht völlig planar auf der Orientierungsschicht vorliegen, sondern einen leichten Aufstellwinkel aufweisen (pretilt).

Es ist erfindungsgemäß bevorzugt, dass zwei oder mehr Orientierungsschichten vorliegen, die eine parallele oder eine um 90° gedrehte Vorzugsrichtung der Moleküle des flüssigkristallinen Mediums auf beiden Seiten der Schaltschicht bewirken.

Besonders bevorzugt enthält die Vorrichtung genau zwei Orientierungsschichten, von denen eine an eine Seite der Schaltschicht angrenzend und die andere an die gegenüberliegende Seite der Schaltschicht angrenzend vorliegt, wobei die beiden Orientierungsschichten eine parallele oder eine um 90° gedrehte Vorzugsrichtung der Moleküle des flüssigkristallinen Mediums auf beiden Seiten der Schaltschicht bewirken.

Bei der parallelen Anordnung liegen die Moleküle des flüssigkristallinen Mediums auf beiden Seiten der Schaltschicht enthaltend das flüssigkristalline Medium und innerhalb der Schaltschicht enthaltend das flüssigkristalline Medium parallel zueinander vor. Bei der um 90° verdrillten Anordnung liegen die Moleküle des flüssigkristallinen Mediums auf der einen Seite der Schaltschicht in einem Winkel von 90° zu den Molekülen auf der anderen Seite der Schaltschicht vor. Innerhalb der Schaltschicht liegen die Moleküle auf Zwischenwinkeln vor, so dass ein gleitender Übergang zwischen der Vorzugsausrichtung auf der einen Seite der Schaltschicht und der Vorzugsrichtung auf der anderen Seite der Schaltschicht vorliegt.

Es ist weiterhin bevorzugt, dass eine homogene Ausrichtung der Moleküle des flüssigkristallinen Mediums im spannungslosen Zustand vorliegt, wobei die Moleküle auf beiden Seiten der Schaltschicht parallel zueinander ausgerichtet sind.

Es sind jedoch alternative Ausführungsformen der Orientierungsschicht und der dadurch bedingten Ausrichtung der Moleküle des flüssigkristallinen Mediums denkbar, die der Fachmann auf dem Gebiet der Vorrichtungen enthaltend flüssigkristalline Medien kennt und bei Bedarf einsetzen kann.

In der Vorrichtung ist die Schaltschicht zwischen zwei Substratschichten angeordnet bzw. von diesen eingeschlossen. Die Substratschichtenbestehen erfindungsgemäß aus Glas .

Bevorzugt ist die Vorrichtung dadurch gekennzeichnet, dass sie keinen Polarisator auf Polymerbasis, besonders bevorzugt keinen in fester Materiephase vorliegenden Polarisator und ganz besonders bevorzugt überhaupt keinen Polarisator umfasst.

Die Vorrichtung kann jedoch gemäß einer alternativen Ausführungsform auch einen oder mehrere Polarisatoren

aufweisen. Bevorzugt sind dies Linearpolarisatoren. Wenn ein oder mehrere Polarisatoren vorhanden sind, so sind diese bevorzugt parallel zur Schaltschicht angeordnet.

Wenn genau ein Polarisator vorhanden ist, so ist dessen Absorptionsrichtung bevorzugt senkrecht stehend zur Vorzugsausrichtung der Moleküle des flüssigkristallinen Mediums der erfindungsgemäßen Vorrichtung auf derjenigen Seite der Schaltschicht, auf der sich der Polarisator befindet.

In der Vorrichtung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-grid-polarisers), welche Infrarotlicht reflektieren, eingesetzt werden. Beispiele für absorptive Polarisatoren, welche in den Vorrichtungen eingesetzt werden können, sind der Itos XP38-Polarisatorfilm und der Nitto Denko GU-1220DUN-Polarisatorfilm. Ein Beispiel für einen circularen Polarisator, welcher erfindungsgemäß verwendet werden kann, ist der Polarisator APNCP37-035-STD (American Polarizers). Ein weiteres Beispiel ist der Polarisator CP42 (ITOS).

Es ist bevorzugt, dass die Vorrichtung genau eine Schaltschicht aufweist.

Bevorzugt hat die Schaltschicht eine Dicke zwischen 1 und 100 $\mu$m, besonders bevorzugt zwischen 5 und 50 $\mu$m.

Erfindungsgemäß enthält die Schaltschicht drei oder mehr unterschiedliche dichroitische Farbstoffe.

Es ist weiterhin bevorzugt, dass mindestens einer der dichroitischen Farbstoffe lumineszierend ist, bevorzugt fluoreszierend.

Unter Fluoreszenz wird dabei verstanden, dass eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht längere Wellenlänge als das absorbierte Licht. Weiterhin bevorzugt ist der Übergang vom angeregten Zustand in den Grundzustand spin-erlaubt, erfolgt also ohne Änderung des Spins. Weiterhin bevorzugt ist die Lebensdauer des angeregten Zustands der fluoreszierenden Verbindung kürzer als $10^{-5}$ s, besonders bevorzugt kürzer als $10^{-6}$ s, ganz besonders bevorzugt zwischen $10^{-9}$ und $10^{-7}$ s.

Die Absorptionsspektren der dichroitischen Farbstoffe im flüssigkristallinen Medium ergänzen sich bevorzugt derart, dass für das Auge der Eindruck von schwarzer Farbe entsteht. Bevorzugt decken die drei oder mehr dichroitischen Farbstoffe des flüssigkristallinen Mediums einen großen Teil des sichtbaren Spektrums ab. Bevorzugt wird dies dadurch erreicht, dass mindestens ein dichroitischer Farbstoff rotes Licht absorbiert, mindestens einer grünes bis gelbes Licht absorbiert und mindestens einer blaues Licht absorbiert.

Wie genau eine Mischung von Farbstoffen hergestellt werden kann, die für das Auge schwarz bzw. grau erscheint, ist dem Fachmann bekannt und beispielweise in Manfred Richter, Einführung in die Farbmetrik, 2. Auflage, 1981, ISBN 3-11-008209-8, Verlag Walter de Gruyter & Co., beschrieben.

Weiterhin bevorzugt absorbieren die dichroitischen Farbstoffe vorwiegend Licht im UV-VIS-NIR-Bereich, d. h. in einem Wellenlängenbereich von 320 bis 2000 nm. UV-Licht, VIS-Licht und NIR-Licht sind dabei wie oben definiert. Besonders bevorzugt weisen die dichroitischen Farbstoffe Absorptionsmaxima auf, die im Bereich von 400 bis 1300 nm liegen.

Der Anteil aller dichroitischen Farbstoffe zusammen im flüssigkristallinen Medium beträgt bevorzugt insgesamt 0.01 bis 10 Gew.-%, besonders bevorzugt 0.1 bis 7 Gew.-% und ganz besonders bevorzugt 0.2 bis 7 Gew.- %. Der Anteil eines einzelnen dichroitischen Farbstoffs beträgt bevorzugt 0.01 bis 10 Gew.-%, bevorzugt 0.05 bis 7 Gew.-% und ganz besonders bevorzugt 0.1 bis 7 Gew.-%.

Weiterhin bevorzugt sind die dichroitischen Farbstoffe gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der dort vorhandenen Tabelle aufgeführten expliziten Verbindungen.

Bevorzugt ist mindestens ein dichroitischer Farbstoff, besonders bevorzugt sind alle dichroitischen Farbstoffe gewählt aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen und Pyrromethenen.

Anthrachinonfarbstoffe sind beispielsweise beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803 und DE 3201120, Naphthochinonfarbstoffe sind beispielsweise beschrieben in DE 3126108 und DE 3202761, Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Lig. Cryst. 39, 39-52 (1977) und H. Seki, C. Shishido, S. Yasui und T. Uchida: Jpn. J. Appl. Phys. 21, 191-192 (1982), und Perylene in EP 60895, EP 68427 und WO 82/1191.

Ganz besonders bevorzugt sind Rylen-Farbstoffe, wie beispielsweise in EP 2166040, US 2011/0042651, EP 68427, EP 47027, EP 60895, DE 3110960 und EP 698649 offenbart.

Gemäß einer bevorzugten Ausführungsform enthält das flüssigkristalline Medium ausschließlich dichroitische

Farbstoffe gewählt aus den Klassen der Rylen-Farbstoffe.

Beispiele für bevorzugte dichroitische Farbstoffe, die im flüssigkristallinen Medium enthalten sein können, sind in der folgenden Tabelle abgebildet.

| |
|---|
| 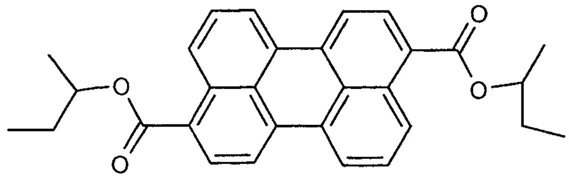 |
| |
| 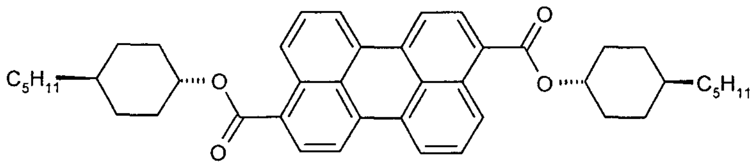 |
| |
| 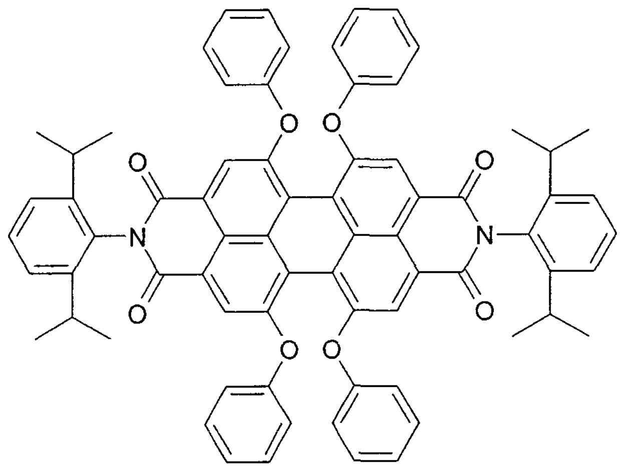 |
| |

| |
|---|
| 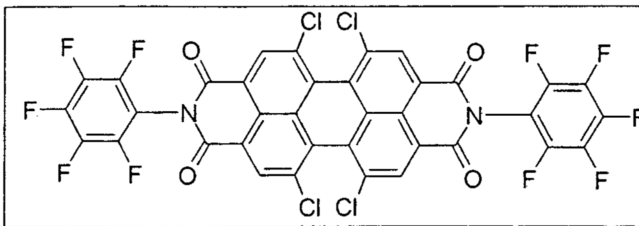 |
| |
| 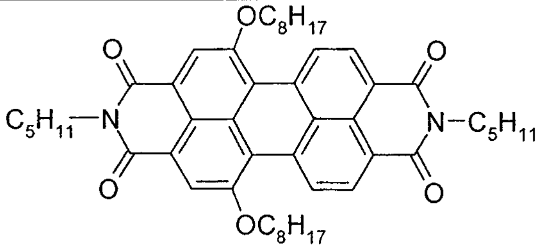 |
| |
| 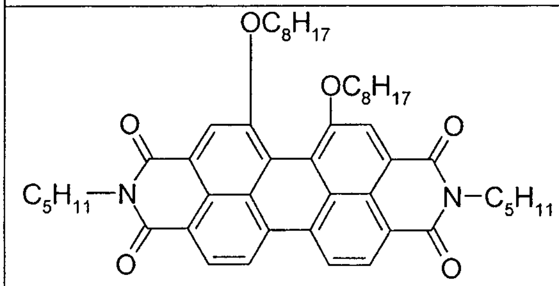 |
| |
| 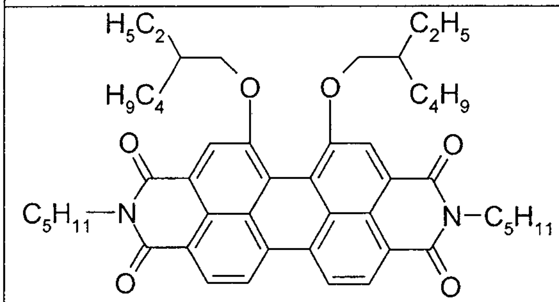 |
| |
| 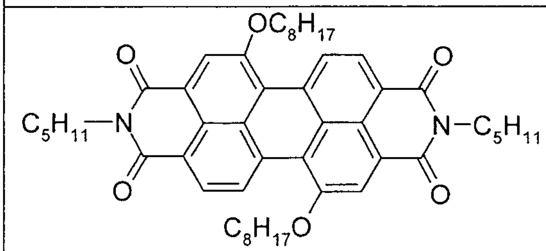 |
| |
| 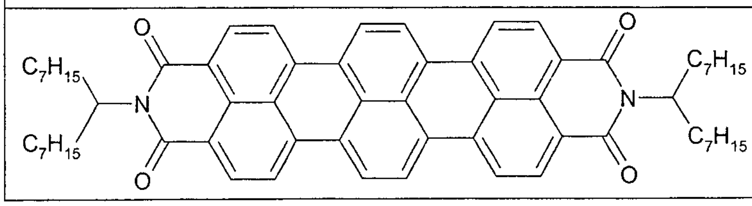 |

| |
|---|
| 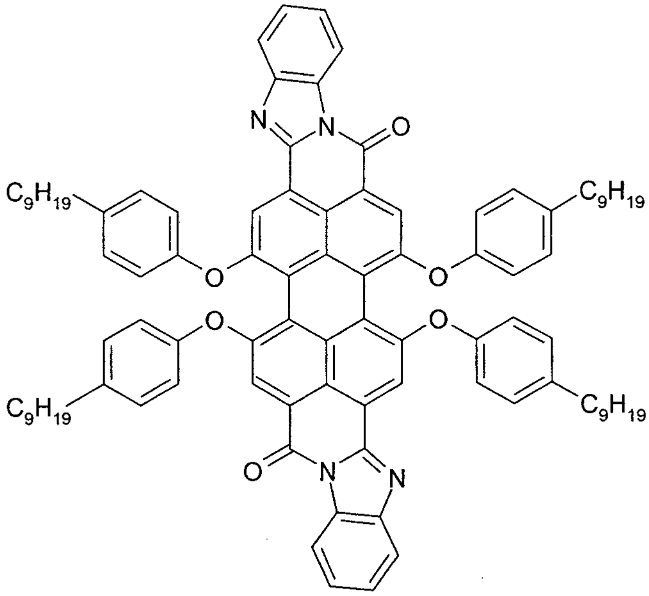 |
| |
| 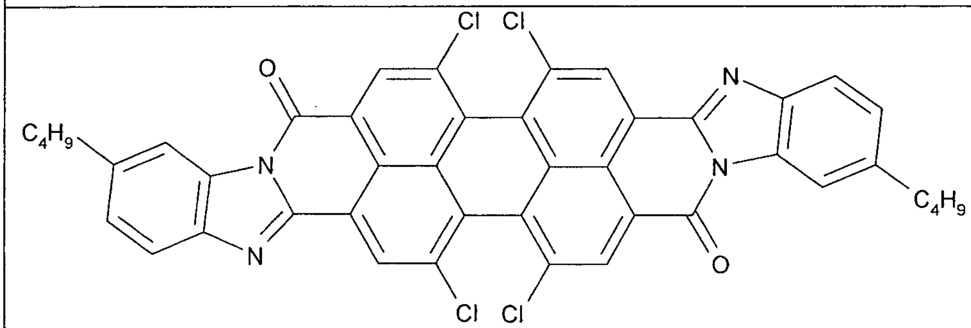 |
| |
| 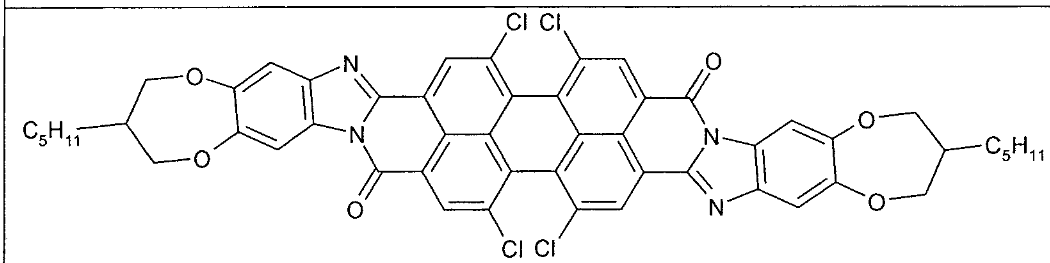 |
| |
| 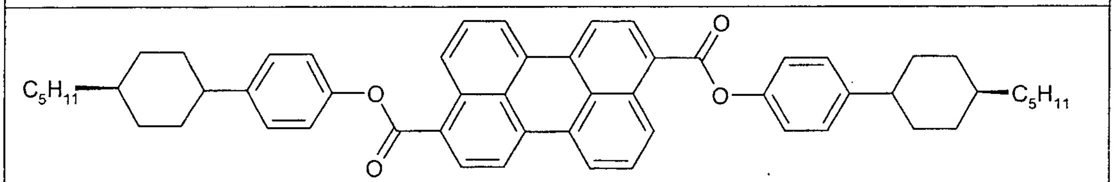 |
| |

| |
|---|
| 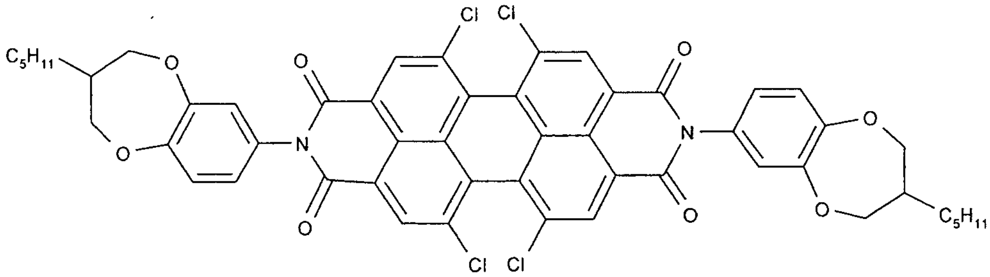 |
| |
| 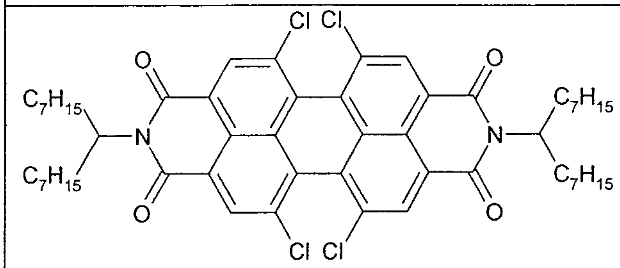 |
| |
| 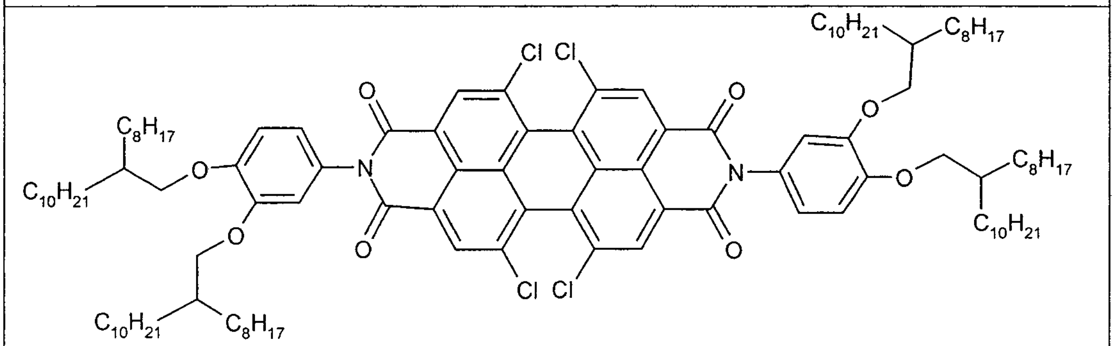 |
| |
| 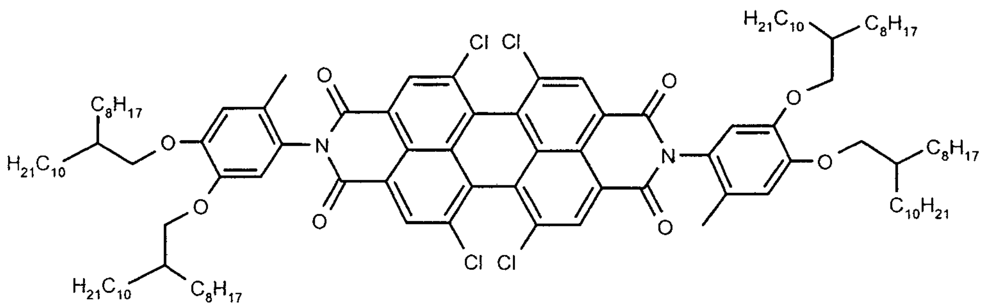 |
| |
| 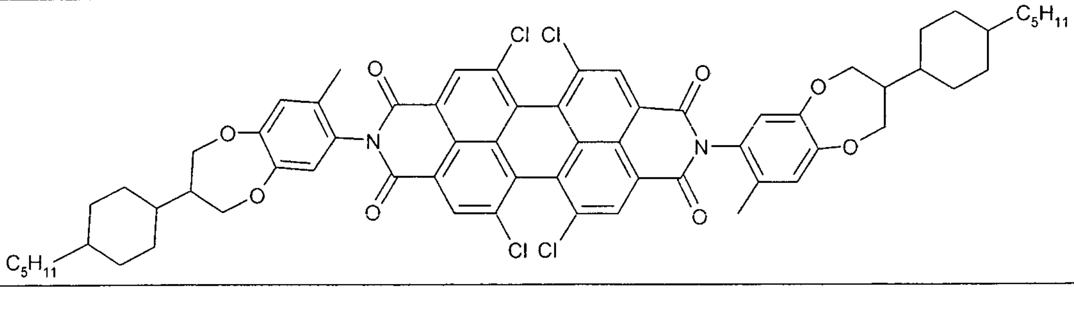 |
| |

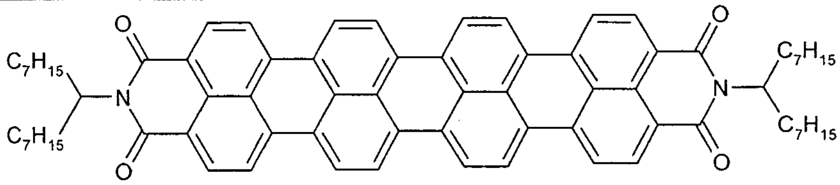

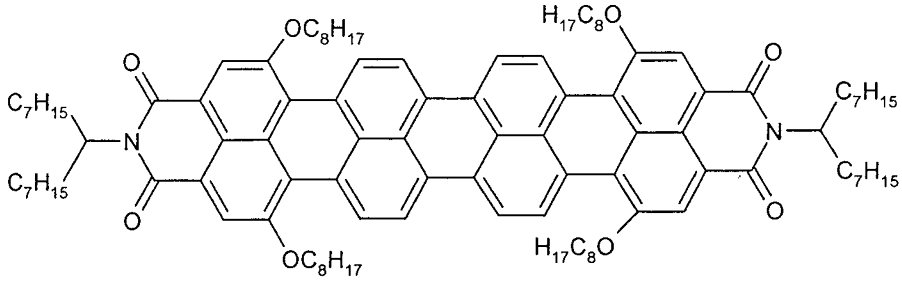

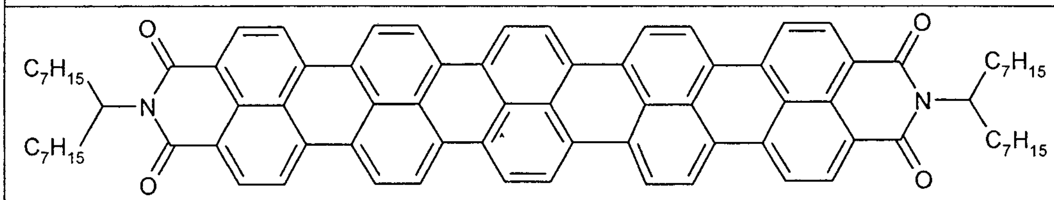

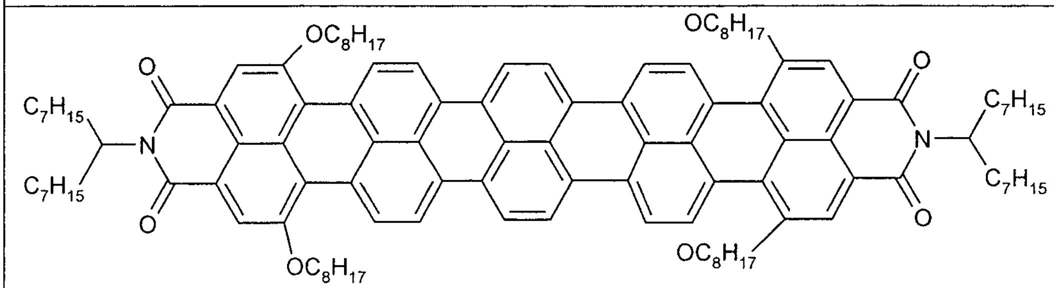

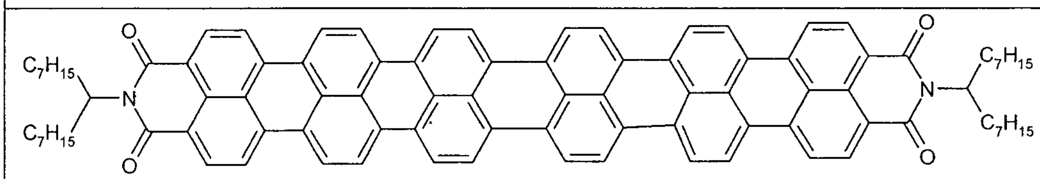

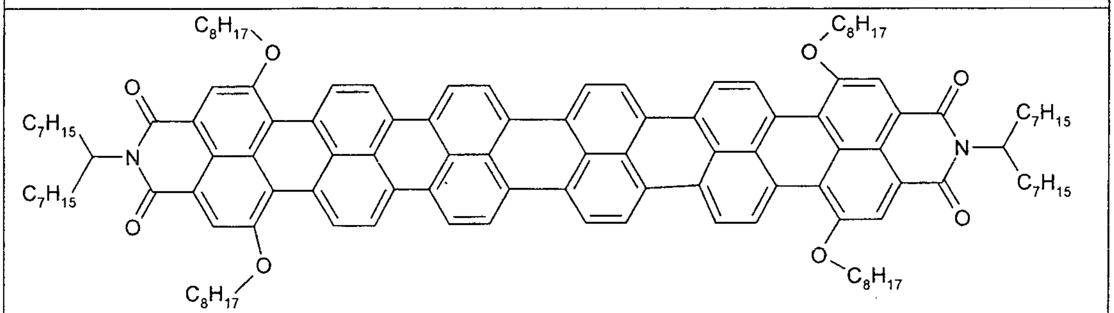

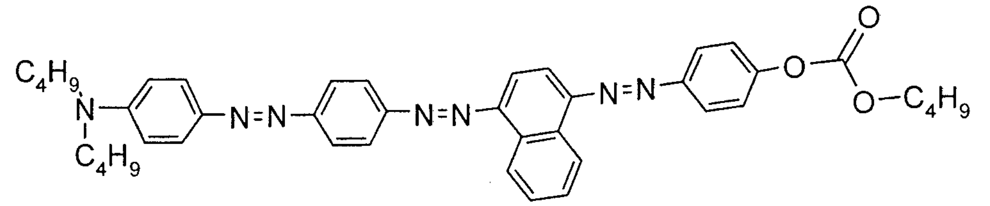

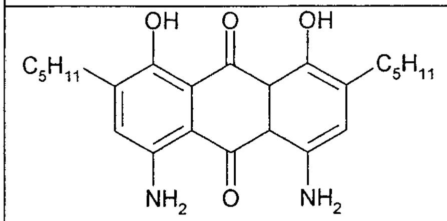

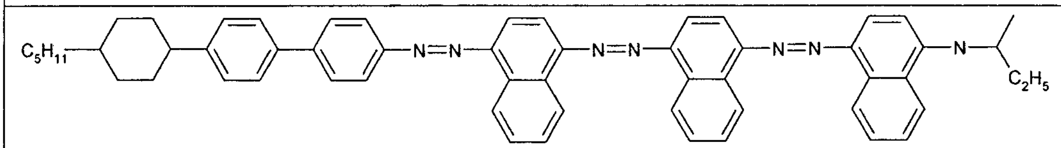

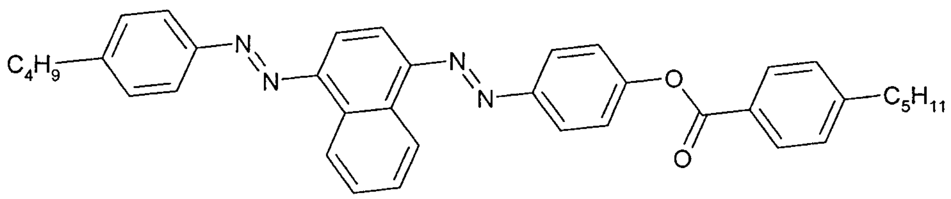

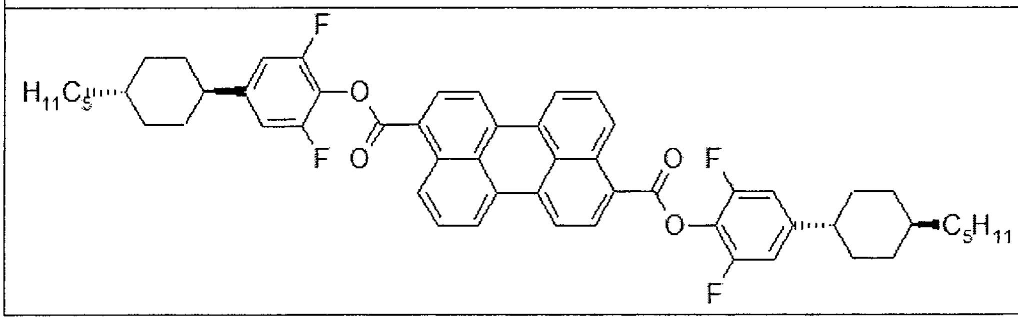

Die Schaltschicht der Vorrichtung umfasst erfindungsgemäß ein flüssigkristallines Medium.

Bevorzugt ist das flüssigkristalline Medium bei Betriebstemperatur der Vorrichtung nematisch flüssigkristallin. Besonders bevorzugt ist es in einer Spanne von +-20 °C, ganz besonders bevorzugt in einer Spanne von +-30 °C über- und unterhalb der Betriebstemperatur der Vorrichtung nematisch flüssigkristallin.

Alternativ kann das flüssigkristalline Medium bei Betriebstemperatur der Vorrichtung cholesterisch flüssigkristallin sein.

Erfindungsgemäß hat das flüssigkristalline Medium einen Klärpunkt, bevorzugt einen Phasenübergang von einem nematisch flüssigkristallinen Zustand zu einem isotropen Zustand, im Temperaturbereich von 70 °C bis 170 °C, bevorzugt von 90 °C bis 160 °C, besonders bevorzugt von 95 °C bis 150 °C und ganz besonders bevorzugt von 105 °C bis 140 °C.

Bevorzugt ist weiterhin die dielektrische Anisotropie $\Delta\varepsilon$ des flüssigkristallinen Mediums größer als 3, besonders bevorzugt größer als 7.

Alternativ kann es bevorzugt sein, dass die dielektrische Anisotropie $\Delta\varepsilon$ des flüssigkristallinen Mediums kleiner ist als -2, bevorzugt kleiner als -3.

Weiterhin bevorzugt umfasst das flüssigkristalline Medium 3 bis 20 verschiedene Verbindungen, bevorzugt 8

bis 18, besonders bevorzugt 10 bis 16 verschiedene Verbindungen.

Weiterhin bevorzugt hat das flüssigkristalline Medium eine optische Anisotropie ($\Delta n$) von 0.01 bis 0.3, besonders bevorzugt von 0.04 bis 0.27.

Weiterhin bevorzugt hat das flüssigkristalline Medium einen spezifischen elektrischen Widerstand von mehr als $10^{10}$ Ohm*cm.

Verbindungen, welche als Bestandteile des flüssigkristallinen Mediums verwendet werden können, sind dem Fachmann bekannt und können als solche beliebig gewählt werden.

Weiterhin ist es bevorzugt, dass das flüssigkristalline Medium mindestens eine Verbindung enthält, welche ein oder mehrere Strukturelemente basierend auf 1,4-Phenylenen und 1,4-Cyclohexylenen aufweist. Besonders bevorzugt ist es, dass das flüssigkristalline Medium mindestens eine Verbindung enthält, welche 2, 3 oder 4, besonders bevorzugt 3 oder 4 Strukturelemente basierend auf 1,4-Phenylenen und 1,4-Cyclohexylenen aufweist.

Das flüssigkristalline Medium kann einen oder mehrere chirale Dotierstoffe enthalten. Diese liegen dann bevorzugt in einer Gesamtkonzentration von 0.01 bis 3 Gew.-%, besonders bevorzugt von 0.05 bis 1 Gew.-% vor. Um hohe Werte für die Verdrillung zu erhalten, kann die Gesamtkonzentration der chiralen Dotierstoffe auch höher als 3 Gew.-% gewählt werden, bevorzugt bis maximal 10 Gew.-%.

Das flüssigkristalline Medium enthält bevorzugt einen oder mehrere Stabilisatoren. Die Gesamtkonzentration der Stabilisatoren liegt bevorzugt zwischen 0.00001 und 10 Gew.-%, besonders bevorzugt zwischen 0.0001 und 1 Gew.-% der Gesamtmischung.

Weiterhin bevorzugt enthält die Vorrichtung ein Lichtleitsystem, welches Licht aus der Schaltschicht zu einer Einheit leitet, welche Lichtenergie in elektrische Energie oder Wärmeenergie umwandelt.

Bevorzugt ist das Lichtleitsystem aufgebaut wie in WO 2009/141295 beschrieben. Das Lichtleitsystem sammelt und konzentriert Licht, das auf die Vorrichtung trifft. Bevorzugt sammelt und konzentriert es Licht, das von fluoreszierenden dichroitischen Farbstoffen in der Schaltschicht enthaltend das flüssigkristalline Medium emittiert wird. Das Lichtleitsystem steht mit einer Vorrichtung zur Umwandlung von Lichtenergie in elektrische Energie, bevorzugt einer Solarzelle, in Kontakt, so dass das gesammelte Licht konzentriert auf diese trifft.

Bevorzugt leitet das Lichtleitsystem Licht durch innere Totalreflexion. Bevorzugt ist die Vorrichtung dadurch gekennzeichnet, dass das Lichtleitsystem mindestens einen Wellenlängen-selektiven Spiegel aufweist, welcher bevorzugt gewählt ist aus einer oder mehreren cholesterischen Flüssigkristallschichten.

Bevorzugt liegen eine oder mehrere Glasschichten in entspiegelter Ausführung vor. Die Herstellung von Antireflexionsbeschichtungen erfolgt durch Beschichtungsmethoden der Dünnschichttechnik. Dazu zählen beispielsweise die physikalische Gasphasenabscheidung, wie thermisches Verdampfen und Sputterdeposition. Die Entspiegelung kann durch ein Einfachschichtsystem oder durch ein Mehrfachschichtsystem erreicht werden.

Bevorzugt ist der Lichtreflexionsgrad $\rho_V$ nach Norm EN410 der Gesamtheit der Schichten der Vorrichtung mit Ausnahme der Schaltschicht kleiner als 35 %, bevorzugt kleiner als 30 %, besonders bevorzugt kleiner als 25 % und ganz besonders bevorzugt kleiner als 20 %.

Besonders bevorzugt liegt ein wie oben angegebener Lichtreflexionsgrad $\rho_V$ nach Norm EN410 der Gesamtheit der Schichten der Vorrichtung mit Ausnahme der Schaltschicht vor, und die Vorrichtung enthält drei oder mehr Glasschichten.

Der Lichtreflexionsgrad $\rho_V$ der Vorrichtung wird bestimmt, indem mit einem Spektralphotometer die spektralen Reflektionsgrade der Schichtenanordnung gemessen werden, und indem daraus gemäß der Norm EN410, Gleichung (4), unter Berücksichtigung der relativen spektralen Verteilung der Normlichtart und des spektralen Hellempfindlichkeitsgrad des Normalbeobachters der Parameter $\rho_V$ berechnet wird.

## Ausführungsbeispiele

In der vorliegenden Erfindung werden Strukturen von flüssigkristallinen Verbindungen durch Abkürzungen wiedergegeben (Akronyme). Diese Abkürzungen werden in WO 2012/052100 explizit vorgestellt und erklärt (S. 63 - 89), so dass zur Erläuterung der Abkürzungen in der vorliegenden Erfindung auf die genannte offengelegte Anmeldung verwiesen wird.

Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C. Der Wert von $\Delta n$ wird bei 589 nm bestimmt und der Wert von $\Delta\varepsilon$ wird bei 1 kHz bestimmt, sofern nicht jeweils explizit anders angegeben. $n_e$ und $n_o$ sind jeweils die Brechungsindices des außerordentlichen und des ordentlichen Lichtstrahls unter den oben angegebenen Bedingungen.

**A) Herstellung der Vorrichtungen**

1) Vorschrift für Aufbau der Vorrichtungen

Es werden die Vorrichtungen E-1 bis E-6 hergestellt, sowie die Vergleichsvorrichtungen V-1 bis V-9.

Die Vorrichtungen E-1 bis E-6 weisen die folgende Schichtabfolge auf:

a) Glasschicht aus poliertem 1.1 mm Soda-Lime-Glas von Corning
b) ITO-Schicht, 200 Angström
c) Orientierungsschicht aus Polyimid AL-1054 von JSR, 300 Angström
d) Flüssigkristalline Schicht (Zusammensetzung unter 2) angegeben), 24.3 μm
e) wie c)
f) wie b)
g) wie a)

Die Orientierungsschichten sind antiparallel gerieben.

Die ITO-Schichten werden entsprechend kontaktiert, um elektrisch schaltbar zu sein.

Die Vergleichsvorrichtungen sind wie dieVorrichtungen E-1 bis E-6 aufgebaut, mit dem Unterschied, dass einer oder beide der Parameter $\tau_{v\ hell}$ (Lichttransmissionsgrad des Hellzustands) und R (Anisotropiegrad) außerhalb des erfindungsgemäßen Bereichs liegen, bedingt durch die Wahl von Host und/oder Farbstoff und/oder Farbstoffkonzentration in der Schaltschicht.

2) Zusammensetzung der Guest-Host-Mischungen der Vorrichtungen (E: erfindungsgemäß, V: Vergleich)

| | Host | Farbstoff | Konzentration Farbstoff / Gew-% |
|---|---|---|---|
| E-1 | H-1 | D-1 | 0.05 |
| | | D-2 | 0.10 |
| | | D-3 | 0.12 |
| E-2 | H-1 | D-1 | 0.10 |
| | | D-2 | 0.21 |
| | | D-3 | 0.24 |
| E-3 | H-1 | D-1 | 0.17 |
| | | D-2 | 0.35 |
| | | D-3 | 0.40 |
| E-4 | H-2 | D-1 | 0.05 |
| | | D-2 | 0.10 |
| | | D-3 | 0.12 |
| E-5 | H-2 | D-1 | 0.10 |
| | | D-2 | 0.21 |
| | | D-3 | 0.24 |
| E-6 | H-2 | D-1 | 0.17 |
| | | D-2 | 0.35 |
| | | D-3 | 0.40 |
| V-1 | H-1 | D-1 | 0.02 |
| | | D-2 | 0.04 |
| | | D-3 | 0.04 |

(fortgesetzt)

| | Host | Farbstoff | Konzentration Farbstoff / Gew-% |
|---|---|---|---|
| V-2 | H-1 | D-1 | 0.03 |
| | | D-2 | 0.05 |
| | | D-3 | 0.06 |
| V-3 | H-1 | D-1 | 0.35 |
| | | D-2 | 0.74 |
| | | D-3 | 0.84 |
| V-4 | H-1 | D-1 | 0.46 |
| | | D-2 | 0.95 |
| | | D-3 | 1.09 |
| V-5 | H-1 | D-1 | 0.62 |
| | | D-2 | 1.29 |
| | | D-3 | 1.47 |
| V-6 | H-1 | D-4 | 0.10 |
| | | Lumogen 305 | 0.075 |
| | | D-3 | 0.125 |
| V-7 | H-1 | D-4 | 0.20 |
| | | Lumogen 305 | 0.15 |
| | | D-3 | 0.25 |
| V-8 | H-1 | D-4 | 0.40 |
| | | Lumogen 305 | 0.30 |
| | | D-3 | 0.50 |
| V-9 | H-2 | D-1 | 0.03 |
| | | D-2 | 0.05 |
| | | D-3 | 0.06 |

3) Zusammensetzung der Host-Mischungen:

| | H-1 | | H-2 | |
|---|---|---|---|---|
| Klärpunkt | 77.5 °C | | 114.5 °C | |
| Dielektrische Anisotropie $\Delta\varepsilon$ | 11.3 | | 10.5 | |
| Optische Anisotropie $\Delta n$ | 0.1255 | | 0.1342 | |
| Zusammensetzung | Verbindung | % | Verbindung | % |
| | PZG-2-N | 0.936 | CPG-3-F | 5 |
| | PZG-3-N | 0.936 | CPG-5-F | 5 |
| | PZG-4-N | 2.184 | CPU-3-F | 15 |
| | PZG-5-N | 2.184 | CPU-5-F | 15 |
| | CP-3-01 | 7.488 | CP-3-N | 16 |

(fortgesetzt)

| Zusammensetzung | Verbindung | % | Verbindung | % |
|---|---|---|---|---|
| | CC-3-4 | 3.12 | CP-5-N | 16 |
| | CPP-3-2 | 2.496 | CCGU-3-F | 7 |
| | CCZGI-3-3 | 2.496 | CGPC-3-3 | 4 |
| | CCZGI-3-5 | 2.496 | CGPC-5-3 | 4 |
| | CCZPC-3-3 | 1.248 | CGPC-5-5 | 4 |
| | CCZPC-3-4 | 1.248 | CCZPC-3-3 | 3 |
| | CCZPC-3-5 | 0.936 | CCZPC-3-4 | 3 |
| | CPZG-3-N | 1.248 | CCZPC-3-5 | 3 |
| | CGPC-5-3 | 1.248 | | |
| | CPPC-5-3 | 0.936 | | |
| | CPU-3-F | 34.4 | | |
| | CPU-5-F | 34.4 | | |

4) Strukturen der Farbstoffe:

| |
|---|
| 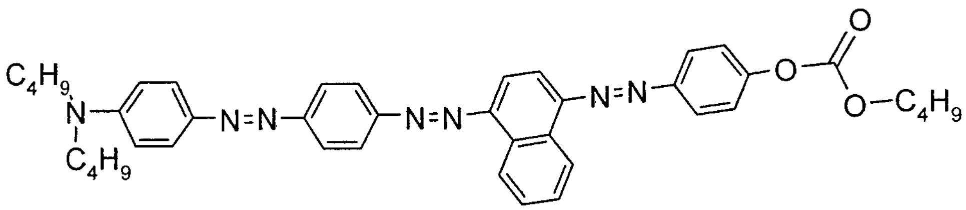 |
| D-1 |
| 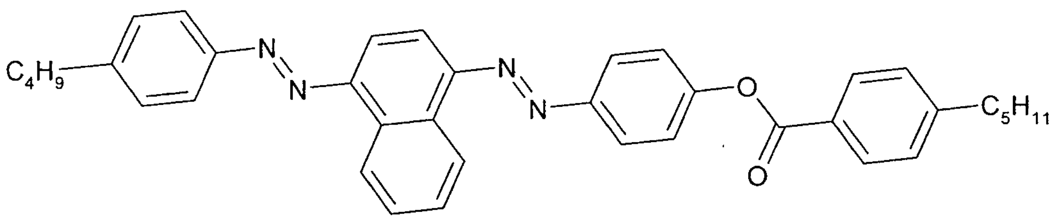 |
| D-2 |
| 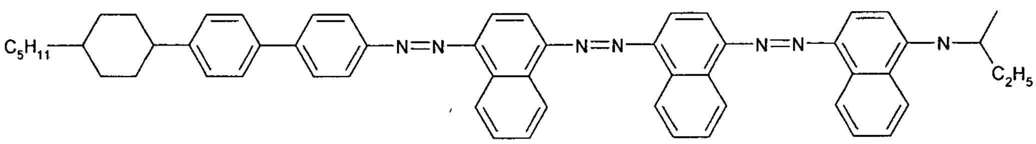 |
| D-3 |
| 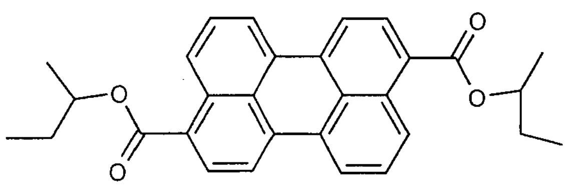 |
| D-4 |

Der Farbstoff Lumogen 305 ist von BASF SE kommerziell erhältlich.

**B) Bestimmung der Parameter $\tau_{v\ hell}$ (Lichttransmissionsgrad des Hellzustands) und R (Anisotropiegrad) und H (Hub)**

1) Der Anisotropiegrad R wird bei 550 nm ermittelt aus dem Wert für die Extinktion einer Vorrichtung enthaltend zwei Glasscheiben mit Orientierungsschichten und dazwischen angeordnetes flüssigkristallines Medium mit dichroitischen Farbstoffen bei paralleler Ausrichtung der Farbstoffmoleküle E(p) und dem Wert für die Extinktion derselben Vorrichtung bei senkrechter Ausrichtung der Farbstoffmoleküle E(s).
Parallele Ausrichtung der Farbstoffmoleküle wird durch eine Orientierungsschicht erreicht. Die Extinktion der Vorrichtung wird gegen eine Vorrichtung, die keinen Farbstoff enthält, aber ansonsten gleich aufgebaut ist, gemessen. Die Messung erfolgt mit polarisiertem Licht, dessen Schwingungsebene einmal parallel zur Orientierungsrichtung schwingt (E(p)) und in einer Folgemessung senkrecht zur Orientierungsrichtung schwingt (E(s)). Die Probe wird dabei nicht geschaltet oder gedreht. Die Messung von E(p) und E(s) erfolgt also über die Drehung der Schwingungsebene des eingestrahlten polarisierten Lichts.
Im Einzelnen wird dabei wie folgt beschrieben vorgegangen: Die Spektren zur Messung von E(s) und E(p) werden mit einem UV-Spektrometer, Modell Lambda 1050, der Firma Perkin Elmer aufgenommen. Das Spektrometer ist mit je einem Glan-Thompson-Polarisator für den Wellenlängenbereich von 250nm - 2500 nm im Mess- und Referenzstrahl ausgestattet. Die beiden Polarisatoren werden von einem Schrittmotor angesteuert und sind in gleicher Richtung ausgerichtet. Eine Veränderung der Polarisatorrichtung des Polarisators, z.B. Umstellen von 0° auf 90°, wird immer synchron und gleichgerichtet für Mess- und Referenzstrahl ausgeführt. Die Ausrichtung eines einzelnen Polarisators kann mit einem Verfahren ermittelt werden, das in der Dissertation von T. Karstens, Universität Würzburg, 1973, beschrieben ist. Hierbei wird der Polarisator in 5°-Schritten gegen eine ausgerichtete dichroitische Probe gedreht und die Extinktion bei einer festen Wellenlänge, bevorzugt im Bereich maximaler Absorption, aufgenommen. Es wird für jede Polarisatorstellung eine neue Nulllinie gefahren. Zur Messung der beiden dichroitischen Spektren E(p) und E(s) befinden sich im Mess- und Referenzstrahl jeweils eine antiparallel geriebene Testzelle, beschichtet mit Polyimid AL-1054 der Firma JSR. Die beiden Testzellen sind von gleicher Schichtdicke auszuwählen, typischerweise15 -25 µm. Im Referenzstrahl befindet sich die Testzelle mit reinem Host (Flüssigkristall). Im Messstrahl befindet sich die Testzelle mit der Lösung aus Farbstoff in Flüssigkristall. Die beiden Testzellen für Mess- und Referenzstrahl werden in gleicher Orientierungsrichtung in den Strahlengang montiert. Um größtmögliche Genauigkeit des Spektrometers zu gewährleisten, wird darauf geachtet, dass E(p) im Wellenlängenbereich seiner stärksten Absorption vorzugsweise zwischen 0.5 und 1.5 liegt. Dies korrespondiert mit Transmissionen von 30% - 5%. Dies wird durch entsprechende Anpassungen der Schichtdicke und/oder Farbstoffkonzentration eingestellt.
Der Anisotropiegrad R wird aus den gemessenen Werten für E(p) und E(s) nach der Formel

$$R = [E(p)-E(s)] / [E(p) + 2*E(s)]$$

berechnet, wie es in "Polarized Light in Optics and Spectroscopy", D. S. Kliger et al., Academic Press, 1990, angegeben ist.
2) Der Lichttransmissionsgrad des Hellzustands $\tau_{v\ hell}$ wird in Prozent angegeben. Er wird berechnet aus den spektralen Transmissionsgraden des Hellzustands einer Vorrichtung enthaltend zwei Glasscheiben mit Orientierungsschichten und dazwischen angeordnetem flüssigkristallinen Medium mit dichroitischen Farbstoffen, bezogen auf eine ansonsten gleiche Vorrichtung ohne Farbstoff im flüssigkristallinen Medium als Referenz. Der Messaufbau ist derselbe wie bei den Messungen der Extinktionen für den Anisotropiegrad.
Der Lichttransmissionsgrad $\tau_{v\ hell}$ wird nach der Europäischen Norm EN410, Gleichung (1) (Bestimmung der lichttechnischen und strahlungsphysikalischen Kenngrößen von Verglasungen) ermittelt aus den gemessenen spektralen Transmissionsgraden unter Berücksichtigung der relativen spektralen Verteilung der Normlichtart und des spektralen Hellempfindlichkeitsgrads des Normalbeobachters.
3) Der Hub H wird in Prozent angegeben. Er stellt die Differenz zwischen dem Lichttransmissionsgrad der Schaltschicht im Hellzustand der Vorrichtung ($\tau_{v\ hell}$) und dem Lichttransmissionsgrad der Schaltschicht im Dunkelzustand der Vorrichtung ($\tau_{v\ dunkel}$) dar. Der Wert $\tau_{v\ dunkel}$ wird dabei entsprechend dem oben angegebenen Verfahren zur Messung von $\tau_{v\ hell}$ ermittelt, während die Vorrichtung in den Dunkelzustand geschaltet ist.
4) Erhaltene Werte für die Vorrichtungen E-1 bis E-6 und V-1 bis V-9

| | $\tau_{v\ hell}$ / % (nach EN410) | R (550 nm) | H / % ($\tau_{v\ hell}$ - $\tau_{v\ dunkel}$, jeweils nach EN410) |
|---|---|---|---|
| E-1 | 87.5 | 0.68 | 29.7 |

(fortgesetzt)

| | $\tau_{v\ hell}$ / % (nach EN410) | R (550 nm) | H / % ($\tau_{v\ hell}$ - $\tau_{v\ dunkel}$, jeweils nach EN410) |
|---|---|---|---|
| E-2 | 74.6 | 0.74 | 33.3 |
| E-3 | 62.0 | 0.73 | 29.9 |
| E-4 | 89.3 | 0.77 | 30.2 |
| E-5 | 79.2 | 0.75 | 35.2 |
| E-6 | 68.0 | 0.77 | 32.5 |
| V-1 | 94.3 | 0.73 | 15.6 |
| V-2 | 92.9 | 0.75 | 20.1 |
| V-3 | 36.9 | ~0.73 | 17.5 |
| V-4 | 29.4 | ~0.73 | 13.5 |
| V-5 | 17.9 | ~0.73 | 7.9 |
| V-6 | 82.3 | 0.50 | 20.2 |
| V-7 | 67.1 | 0.49 | 24.6 |
| V-8 | 44.3 | 0.49 | 20.1 |
| V-9 | 93.8 | 0.79 | 20.7 |

Die Beispiele zeigen, dass je nach Wahl der Parameter $\tau_{v\ hell}$ und R Vorrichtungen mit sehr unterschiedlichen Hüben H erhalten werden - zwischen 7.9 % und 35.2 %.

Erwünschte Hübe H im Bereich von 25 % und höher (Vorrichtungen E-1 bis E-6) werden nur erreicht, wenn die Parameter $\tau_{v\ hell}$ und R geeignet gewählt werden: R muss einen Wert von mindestens 0.65 aufweisen, und $\tau_{v\ hell}$ muss zwischen 40 und 90 % liegen.

Sind einer oder beide der Parameter außerhalb dieses Bereichs gewählt, werden zu niedrige Hübe H erreicht, die deutlich unter 20 % liegen, teilweise unter 10 % (Vergleichsvorrichtungen V-1 bis V-9).

Die Messungen zeigen, dass bei zu gering gewähltem Anisotropiegrad R grundsätzlich niedrige Hübe erreicht werden (V-6 bis V-8). Dabei ändert es nichts, ob der Wert für $\tau_{v\ hell}$ hoch, wie in Beispiel V-6, oder niedrig, wie in Beispiel V-8, gewählt ist.

Ist jedoch der Anisotropiegrad hoch genug (E-1 bis E-6 und V-9) ist das Erreichen von geeigneten Hüben H möglich, jedoch nur in Kombination mit geeigneten Werten für $\tau_{v\ hell}$, wie das Beispiel von V-9 zeigt, bei dem trotz geeignetem Wert für R wegen des zu hohen $\tau_{v\ hell}$ kein zufriedenstellender Wert für den Hub H erhalten wird.

Die Messungen zeigen weiterhin, dass bei zu niedriger Helltransmission $\tau_{v\ hell}$ grundsätzlich nur niedrige Hübe erreicht werden, ungeachtet ob ein geeigneter Wert für R vorliegt (V-5).

Die Messungen zeigen weiterhin, dass im Fall von zu hohen Werten für $\tau_{v\ hell}$ (V-1, V-2 und V-9) keine zufriedenstellenden Werte für den Hub H erzielt werden können, ungeachtet ob der Wert für die Anisotropie R hoch oder niedrig ist.

Die Versuche zeigen daher zusammenfassend das überraschende Ergebnis, dass nur bei Kombination von geeigneten Werten für die Anisotropie mit geeigneten Werten für die Helltransmission $\tau_{v\ hell}$ hohe Hübe der Lichttransmission erreicht werden können.

Die konkret gezeigten Beispiele dienen der Erläuterung und Verdeutlichung der Erfindung. Der Fachmann kann weitere Vorrichtungen unter dem Anspruchsumfang herstellen, indem er flüssigkristalline Medien mit geeignetem Anisotropiegrad herstellt. Dies gelingt unter Hinzuziehung seines allgemeinen Fachwissens und allgemeiner grundlegender Zusammenhänge, wie beispielsweise des Zusammenhangs zwischen molekularer Struktur und Anisotropiegrad eines Farbstoffs und dem Einfluss der weiteren Verbindungen des flüssigkristallinen Mediums auf diesen Parameter. Vorrichtungen mit geeigneter Helltransmission lassen sich durch geeignete Wahl der Extinktion der Farbstoffe und ihrer Konzentration in der Schaltschicht herstellen.

## Patentansprüche

1. Fenster, umfassend eine Vorrichtung zur Regulierung des Lichtdurchtritts durch eine lichtdurchlässige Fläche, wobei

die Vorrichtung zwei Substratschichten aus Glas und eine zwischen diesen Substratschichten angeordnete Schaltschicht enthält, welche ein flüssigkristallines Medium mit mindestens einen dichroitischen Farbstoff enthält, und wobei die Schaltschicht einen Anisotropiegrad R von mindestens 0,65 und einen Lichttransmissionsgrad des Hellzustands $\tau_{v\ hell}$ nach Norm EN410 von 40 % bis 90 % aufweist, wobei die Schaltschicht drei oder mehr unterschiedliche dichroitische Farbstoffe enthält, wobei das flüssigkristalline Medium einen Klärpunkt im Temperaturbereich von 70 °C bis 170 °C hat,
und wobei die Vorrichtung eine Flächenausdehnung von mindestens 0,05 $m^2$ aufweist.

2. Fenster nach Anspruch 1, **dadurch gekennzeichnet, dass** die Vorrichtung eine oder mehrere Orientierungsschichten enthält, welche direkt angrenzend an die Schaltschicht angeordnet sind.

3. Fenster nach Anspruch 1 oder 2, **dadurch gekennzeichnet, dass** die Vorrichtung genau zwei Orientierungsschichten enthält, von denen eine an eine Seite der Schaltschicht angrenzend und die andere an die gegenüberliegende Seite der Schaltschicht angrenzend vorliegt, und wobei die beiden Orientierungsschichten eine parallele oder eine um 90° gedrehte Vorzugsrichtung der Moleküle des flüssigkristallinen Mediums auf beiden Seiten der Schaltschicht bewirken.

4. Fenster nach einem oder mehreren der Ansprüche 1 bis 3, **dadurch gekennzeichnet, dass** eine homogene Ausrichtung der Moleküle des flüssigkristallinen Mediums im spannungslosen Zustand vorliegt, wobei die Moleküle auf beiden Seiten der Schaltschicht parallel zueinander ausgerichtet sind.

5. Fenster nach einem oder mehreren der Ansprüche 1 bis 4, **dadurch gekennzeichnet, dass** die Vorrichtung Mittel zur Ausrichtung der Moleküle des flüssigkristallinen Mediums der Schaltschicht durch elektrische Spannung aufweist.

6. Fenster nach einem oder mehreren der Ansprüche 1 bis 5, **dadurch gekennzeichnet, dass** eine oder mehrere der Glasschichten in entspiegelter Ausführung vorliegen.

7. Fenster nach einem oder mehreren der Ansprüche 1 bis 6, **dadurch gekennzeichnet, dass** die Vorrichtung genau eine Schaltschicht aufweist.

8. Fenster nach einem oder mehreren der Ansprüche 1 bis 7, **dadurch gekennzeichnet, dass** mindestens einer der dichroitischen Farbstoffe gewählt ist aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen und Pyrromethenen.

9. Fenster nach einem oder mehreren der Ansprüche 1 bis 8, **dadurch gekennzeichnet, dass** die Schaltschicht einen Anisotropiegrad R von 0,7 bis 0,9 aufweist.

10. Fenster nach einem oder mehreren der Ansprüche 1 bis 9, **dadurch gekennzeichnet, dass** die Schaltschicht einen Lichttransmissionsgrad des Hellzustands $\tau_{v\ hell}$ von 60 % bis 85 % aufweist.

11. Fenster nach einem oder mehreren der Ansprüche 1 bis 10, **dadurch gekennzeichnet, dass** der Lichtreflexionsgrad $\rho_v$ nach Norm EN410 der Gesamtheit der Schichten der Vorrichtung mit Ausnahme der Schaltschicht kleiner als 35 % ist, bevorzugt kleiner als 30 % ist, besonders bevorzugt kleiner als 25 % ist und ganz besonders bevorzugt kleiner als 20 % ist.

12. Fenster nach einem oder mehreren der Ansprüche 1 bis 11, wobei
das Fenster als Mehrscheiben-Isolierglas-Fenster ausgestaltet ist.

## Claims

1. Window comprising a device for regulating the passage of light through a light-transmitting area, where the device comprises two glass substrates and a switching layer, arranged between these substrate layers, which comprises a liquid-crystalline medium comprising at least one dichroic dye, and where the switching layer has a degree of anisotropy R of at least 0.65 and a light transmittance in the bright state $\tau_{v\ bright}$, in accordance with the EN410 standard, of 40% to 90%, where the switching layer comprises three or more different dichroic dyes,
where the liquid-crystalline medium has a clearing point in the temperature range from 70°C to 170°C,

and where the device has an area of at least 0.05 $m^2$.

2. Window according to Claim 1, **characterised in that** the device comprises one or more alignment layers which are arranged directly adjacent to the switching layer.

3. Window according to Claim 1 or 2, **characterised in that** the device comprises precisely two alignment layers, one of which is adjacent to one side of the switching layer and the other is adjacent to the opposite side of the switching layer, and where the two alignment layers cause a parallel or 90°-rotated preferential direction of the molecules of the liquid-crystalline medium on both sides of the switching layer.

4. Window according to one or more of Claims 1 to 3, **characterised in that** a homogeneous alignment of the molecules of the liquid-crystalline medium is present in the voltage-free state, where the molecules are aligned parallel to one another on both sides of the switching layer.

5. Window according to one or more of Claims 1 to 4, **characterised in that** the device has means for the alignment of the molecules of the liquid-crystalline medium of the switching layer by electrical voltage.

6. Window according to one or more of Claims 1 to 5, **characterised in that** one or more of the glass layers have an antireflection design.

7. Window according to one or more of Claims 1 to 6, **characterised in that** the device has precisely one switching layer.

8. Window according to one or more of Claims 1 to 7, **characterised in that** at least one of the dichroic dyes is selected from azo compounds, anthraquinones, methine compounds, azomethine compounds, merocyanine compounds, naphthoquinones, tetrazines, perylenes, terrylenes, quaterrylenes, higher rylenes and pyrromethenes.

9. Window according to one or more of Claims 1 to 8, **characterised in that** the switching layer has a degree of anisotropy R of 0.7 to 0.9.

10. Window according to one or more of Claims 1 to 9, **characterised in that** the switching layer has a light transmittance in the bright state $\tau_{v\ bright}$ of 60% to 5%.

11. Window according to one or more of Claims 1 to 10, **characterised in that** the light reflectance $\rho_v$, in accordance with the EN410 standard, of the totality of the layers of the device with the exception of the switching layer is less than 35%, preferably less than 30%, particularly preferably less than 25% and very particularly preferably less than 20%.

12. Window according to one or more of Claims 1 to 11, where the window is designed as a multipane insulating-glass window.

**Revendications**

1. Fenêtre comprenant un dispositif pour réguler le passage de la lumière au travers d'une aire laissant passer la lumière, dans laquelle le dispositif comprend deux substrats en verre et une couche de commutation, qui est agencée entre ces couches de substrat, laquelle comprend un milieu cristallin liquide qui comprend au moins un colorant dichroïque, et dans laquelle la couche de commutation présente un degré d'anisotropie R d'au moins 0,65 et une transmittance de la lumière dans l'état lumineux $\tau_{v\ état\ lumineux}$, conformément au standard EN410, de 40 % à 90 %, dans laquelle la couche de commutation comprend trois colorants dichroïques ou plus différents,
dans laquelle le milieu cristallin liquide présente un point de clarification dans la plage de températures qui va de 70° C à 170° C,
et dans laquelle le dispositif présente une aire d'au moins 0,05 $m^2$.

2. Fenêtre selon la revendication 1, **caractérisée en ce que** le dispositif comprend une ou plusieurs couche(s) d'alignement qui est/sont agencée(s) de sorte qu'elle(s) soi(en)t directement adjacente(s) à la couche de commutation.

3. Fenêtre selon la revendication 1 ou 2, **caractérisée en ce que** le dispositif comprend précisément deux couches d'alignement dont l'une est adjacente à un côté de la couche de commutation et dont l'autre est adjacente au côté

opposé de la couche de commutation, et dans laquelle les deux couches d'alignement génèrent une direction préférentielle parallèle ou tournée de 90° des molécules du milieu cristallin liquide sur les deux côtés de la couche de commutation.

**4.** Fenêtre selon une ou plusieurs des revendications 1 à 3, **caractérisée en ce qu'**un alignement homogène des molécules du milieu cristallin liquide est présent dans l'état sans tension, état dans lequel les molécules sont alignées parallèlement les unes aux autres sur les deux côtés de la couche de commutation.

**5.** Fenêtre selon une ou plusieurs des revendications 1 à 4, **caractérisée en ce que** le dispositif comporte un moyen pour l'alignement des molécules du milieu cristallin liquide de la couche de commutation au moyen d'une tension électrique.

**6.** Fenêtre selon une ou plusieurs des revendications 1 à 5, **caractérisée en ce qu'**une ou plusieurs des couches en verre présente(nt) une conception antireflet.

**7.** Fenêtre selon une ou plusieurs des revendications 1 à 6, **caractérisée en ce que** le dispositif comporte précisément une seule couche de commutation.

**8.** Fenêtre selon une ou plusieurs des revendications 1 à 7, **caractérisée en ce qu'**au moins l'un des colorants dichroïques est sélectionné parmi les composés azo, les anthraquinones, les composés de méthine, les composés d'azométhine, les composés de mérocyanine, les naphtoquinones, les tétrazines, les pérylènes, les terrylènes, les quaterrylènes, les rylènes d'ordre supérieur et les pyrrométhènes.

**9.** Fenêtre selon une ou plusieurs des revendications 1 à 8, **caractérisée en ce que** la couche de commutation présente un degré d'anisotropie R de 0,7 à 0,9.

**10.** Fenêtre selon une ou plusieurs des revendications 1 à 9, **caractérisée en ce que** la couche de commutation présente une transmittance de la lumière dans l'état lumineux $\tau_{v\ \text{état lumineux}}$ de 60 % à 85 %.

**11.** Fenêtre selon une ou plusieurs des revendications 1 à 10, **caractérisée en ce que** la réflectance $\rho_v$, conformément au standard EN410, de la totalité des couches du dispositif à l'exception de la couche de commutation est inférieure à 35 %, de préférence inférieure à 30 %, de façon particulièrement préférable, inférieure à 25 % et de façon très particulièrement préférable, inférieure à 20 %.

**12.** Fenêtre selon une ou plusieurs des revendications 1 à 11, dans laquelle la fenêtre est conçue en tant que fenêtre en verre isolant à multiples vitres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009141295 A
- WO 2010118422 A
- WO 2012047843 A
- JP 2008268762 A
- WO 2014090373 A1
- US 20090098314 A1
- US 7038745 B
- US 6099758 A
- US 20110043732 A
- US 7023602 B
- EP 34832 A
- EP 44893 A
- EP 48583 A
- EP 54217 A
- EP 56492 A
- EP 59036 A
- GB 2065158 A
- GB 2065695 A
- GB 2081736 A
- GB 2082196 A
- GB 2094822 A
- GB 2094825 A
- JP OS55123673 A
- DE 3017877
- DE 3040102
- DE 3115147
- DE 3115762
- DE 3150803
- DE 3201120
- DE 3126108
- DE 3202761
- EP 43904 A
- DE 3123519
- WO 822054 A
- GB 2079770 A
- JP OS5657850 A
- JP OS56104984 B
- US 4308161 A
- US 4308162 A
- US 4340973 A
- EP 60895 A
- EP 68427 A
- WO 821191 A
- EP 2166040 A
- US 20110042651 A
- EP 47027 A
- DE 3110960
- EP 698649 A
- WO 2012052100 A


### In der Beschreibung aufgeführte Nicht-Patentliteratur


- **B. BAHADUR et al.** *Mol. Cryst. Liq. Cryst.,* 1991, vol. 209, 39-61
- *Technical Digest SID,* 2006, 45-1
- **MANFRED RICHTER.** Einführung in die Farbmetrik. Verlag Walter de Gruyter & Co, 1981
- **B. BAHADUR.** Liquid Crystals - Applications and Uses. World Scientific Publishing, 1992, vol. 3
- **T. UCHIDA ; C. SHISHIDO ; H. SEKI ; M. WADA.** *Mol. Cryst. Lig. Cryst.,* 1977, vol. 39, 39-52
- **H. SEKI ; C. SHISHIDO ; S. YASUI ; T. UCHIDA.** *Jpn. J. Appl. Phys.,* 1982, vol. 21, 191-192
- Merck Liquid Crystals, Physical Properties of Liquid Crystals. Status. Merck KGaA, November 1997
- **T. KARSTENS.** Dissertation. Universität Würzburg, 1973
- **D. S. KLIGER et al.** Polarized Light in Optics and Spectroscopy. Academic Press, 1990